# EUROPEAN PATENT SPECIFICATION

(11) **EP 0 700 748 B1**
(45) Date of publication and mention of the grant of the patent: **22.07.1998**
(21) Application number: 94114301.8
(22) Date of filing: 12.09.1994
(51) Int. Cl.: B23P 15/00, F16G 11/12

(54) **Method for manufacturing anchor member**
Herstellungsverfahren eines Verankerungselements
Procédé de fabrication d'un élément d'ancrage

(43) Date of publication of application: 13.03.1996
(73) Proprietor: Huang, Han-Ching, Taichung (TW)
(72) Inventor: Huang, Han-Ching, Taichung (TW)
(74) Representative: Casalonga, Axel

(56) References cited:
- EP-A- 0 033 143
- EP-A- 0 421 206
- US-A- 2 881 510
- US-A- 3 442 000
- US-A- 3 806 265

## Description

The invention relates to a method for manufacturing an anchor device which is provided for securing two bolts or cables together.

A typical known anchor device is shown in FIG. 9 and comprises a body 1 including a hollow interior 12 and including two cylindrical members 10 secured to the ends by welding processes at welding lines 13. The cylindrical members 10 each includes an inner thread 11 for engaging with bolts or with outer threads formed in the cables. The bolts may be forced toward each other for fastening objects when the anchor device 1 is rotated relative to the bolts 3. However, the cylindrical members 10 may usually be disengaged from the body 1 at the welding lines 13 when the load to the anchor device is too large. In addition, it will be difficult to hold the cylindrical members 10 and the body 1 in place while operating welding processes.

Another type of anchor devices is made by casting processes and also has poor tensile strength.

A method for manufacturing an anchor device for securing two bolts or cables together, is known from EP-A-0 033 143. This method comprises the steps of preparing a ring, forming the ring to an elongate body having two ends, forming flat surfaces on the ends of the elongate body (21), and forming inner threads in holes in the ends of the elongate body, the ends of the elongate body are formed in one piece with the elongate body.

The invention is to provide a method for manufacturing an anchor device which is formed in one piece and which includes an excellent tensile strength.
FIGS. 1 to 7 are perspective views illustrating the processes for manufacturing the anchor device;
FIG. 8 is a cross sectional view illustrating the application of the anchor device; and
FIG. 9 is a perspective view illustrating the typical known anchor device.

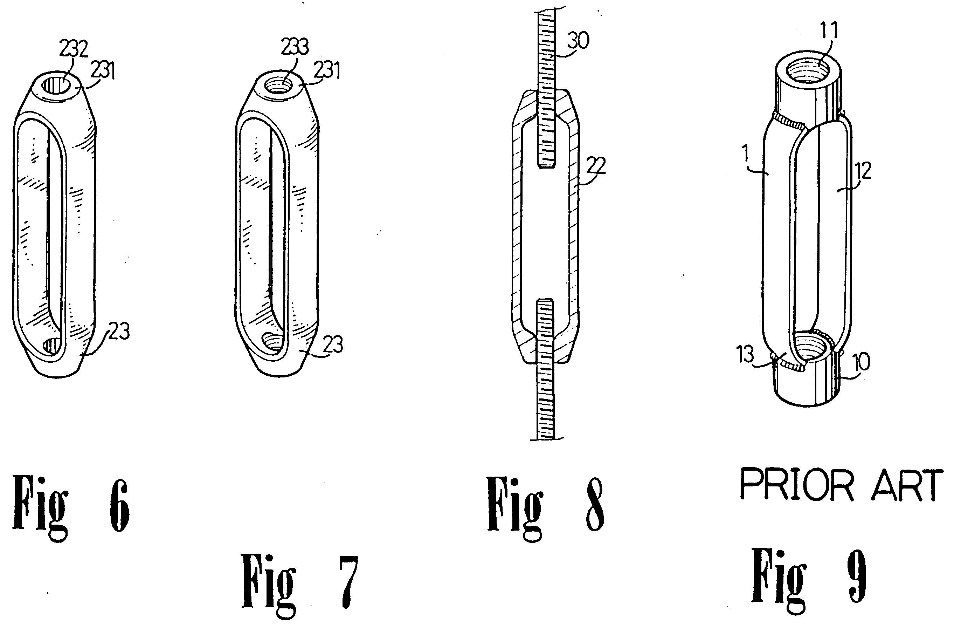

Referring to FIG. 8, a method is provided for manufacturing an anchor device 22 which is formed in one piece and includes two ends each having an inner thread for engaging with two bolts or two cables 30 having outer threads so as to fastening objects.

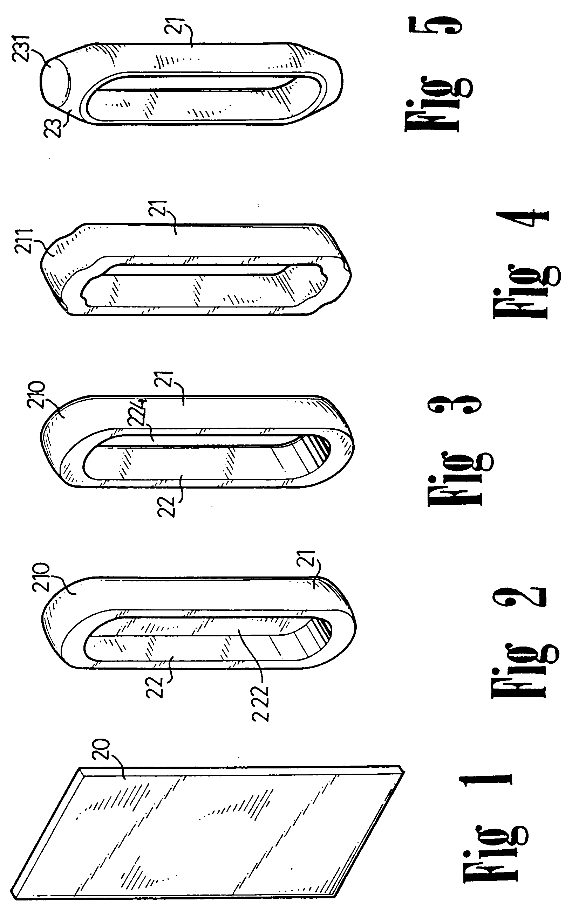

Referring next to FIGS. 1 to 7, the method comprises the following processes. First, prepare a board 20 (FIG. 1) of metal or other materials that may be forged. The board 20 is forged into an elongated body 21 having two rounded ends 210 and having a recess 22 formed therein and defined by an enclosure member 222 (FIG. 2). The enclosure member 222 is then punched off so as to form a through opening 224 such that the recess 22 is formed and extended through the body 21 (FIG. 3). The rounded ends 210 are then forged to convex shaped members 211 (FIG. 4) and are then forged into frustum shaped end portions 23 (FIG. 5). The end portions 23 each includes a flat surface 231 formed therein. Two holes 232 are drilled in the end portions 23 and inner threads 233 are formed in the holes 232 for engaging with the bolts 30.

The end portions 23 are formed in one piece with the body 21 of the anchor device such that the anchor device includes an excellent tensile strength.

## Claims

1. A method for manufacturing an anchor device for securing two bolts or cables together, comprising the following steps: preparing a board (20), forging the board (20) such as to form an elongate body (21) having an elongate recess (22) formed therein and having two opposite ends (210), the recess (22) being defined by an enclosure member (222), punching the enclosure member (222) out of the elongate body (21) so as to form a through opening (224), forging the ends (210) of the elongate body (21) so as to form flat surfaces (231) thereon, drilling holes (232) in the ends (210) of the elongate body (21), and forming inner threads (233) in the holes (232), the ends (210) of the elongate body (21) being formed in one piece with the elongate body (21) such that the anchor device has an excellent tensile strength.

## Patentansprüche

1. Verfahren zum Herstellen eines Verankerungselementes zum gegenseitigen festen Verbinden zweier Bolzen oder Kabel, enthaltend die folgenden Schritte: Herrichten einer Platte (20); Schmieden der Platte (20) derart, daß ein länglicher Körper (21) geformt wird, in welchem eine längliche Vertiefung (22) gebildet ist und der zwei gegenüberliegende Enden (210) hat, wobei die Vertiefung (22) durch ein Innenstück (222) abgegrenzt ist; Ausstanzen des Innenstückes (222) aus dem länglichen Körper (21), so daß eine Durchgangsöffnung (224) gebildet wird; Schmieden der Enden (210) des länglichen Körpers (21), so daß flache Oberflächen (231) an ihnen gebildet werden; Bohren von Löchern (232) in die Enden (210) des länglichen Körpers (21) und Formen von Innengewinden (233) in den Löchern (232); wobei die Enden (210) des länglichen Körpers (21) in einem Stück mit dem länglichen Körper (21) geformt werden, so daß das Verankerungselement eine vorzügliche Zerreißfestigkeit hat.

## Revendications

1. Procédé de fabrication d'un élément d'ancrage servant à assujettir l'un à l'autre deux vis ou câbles, comprenant les étapes suivantes : préparation d'une plaque (20); forgeage de la plaque (20) afin de former un corps allongé (21) dans lequel est formée une cavité allongée (22) et qui comporte deux extrémités opposées (210), la cavité (22) étant définie par un élément de fermeture (222); le poinçonnage de l'élément de fermeture (222) hors du corps allongé (21) de manière à former une ouverture traversante (224); le forgeage des extrémités (210) du corps allongé (21) afin d'y former des surfaces plates (231); le perçage de trous (232) dans les extrémités (210) du corps allongé (21); et la formation de filets intérieurs (233) dans les trous (232), les extrémités (210) du corps allongé (21) étant faites d'une seule pièce avec le corps allongé (21) de sorte que l'élément d'ancrage à une excellente résistance à la traction.
